# EUROPEAN PATENT APPLICATION

(11) **EP 4 757 194 A1**
(43) Date of publication of application: **10.06.2026**
(21) Application number: 24853576.7
(22) Date of filing: 01.08.2024
(51) Int. Cl.: H04B 7/0408

(54) **BEAM SCANNING APPARATUS, ANTENNA ARRAY DETERMINATION METHOD, AND SATELLITE COMMUNICATION SYSTEM**

(30) Priority: 11.08.2023 CN 202311016988
(71) Applicant: ZTE CORPORATION, Shenzhen, Guangdong 518057 (CN)
(72) Inventor: WANG, Xing, Shenzhen, Guangdong 518057 (CN); BIE, Yenan, Shenzhen, Guangdong 518057 (CN); YAN, Bing, Shenzhen, Guangdong 518057 (CN); ZHU, Daohong, Shenzhen, Guangdong 518057 (CN); WANG, Xuxu, Shenzhen, Guangdong 518057 (CN); WANG, Shan, Shenzhen, Guangdong 518057 (CN); DUAN, Yajuan, Shenzhen, Guangdong 518057 (CN)
(74) Representative: Ziebig Hengelhaupt Intellectual Property Attorneys Patentanwaltskanzlei PartGmbB
(86) International application number: PCT/CN2024/109204
(87) International publication number: WO 2025/036164

(57) **Abstract**

Provided in the present application are a beam scanning apparatus, an antenna array determination method, and a satellite communication system. The beam scanning apparatus comprises an antenna module, wherein the antenna module comprises S antenna arrays, S being an integer greater than 1; and a coverage area of a satellite communication system is divided into S sub-areas according to quadrants, and each antenna array is used for performing beam scanning on one sub-area.

## Description

### CROSS-REFERENCE TO RELATED APPLICATIONS

The present application claims priority to Chinese Patent Application No. 202311016988.6 filed on August 11, 2023 to the CNIPA, and entitled "BEAM SCANNING APPARATUS, ANTENNA ARRAY DETERMINATION METHOD, AND SATELLITE COMMUNICATION SYSTEM", the entire content of which is incorporated herein by reference.

### TECHNICAL FIELD

The present application relates to the technical field of satellite communication, in particular to a beam scanning apparatus, an antenna array determination method, and a satellite communication system.

### BACKGROUND

Currently, satellites in operation and deployment typically adopt different spot beamforming methods and application modes to perform communication coverage on different physical areas on the ground so as to provide global communication. In the related art, a satellite communication system typically adopts an analog-side phase-shift technology or an all-digital phase-shift technology to perform phase-shift processing on a beam, and then forms a number of high-gain spot beams through its antenna array face or its sub-array, so as to achieve a high-gain spot beam for a designated area service under single-star coverage.

With the development of the satellite communication system, in order to better provide global communication, it is required to enhance the single-star coverage, i.e., the satellite communication system needs to achieve beam scanning at a larger angle. However, most of current satellite communication systems adopt single-array face antennas for beam scanning, and it is difficult for the single-array antennas to achieve beam scanning at a larger angle.

### SUMMARY

In a first aspect, a beam scanning apparatus is provided. The beam scanning apparatus is applied to a satellite communication system and includes an antenna module. The antenna module includes S antenna arrays, and S is an integer greater than 1. A scanning area of the satellite communication system is divided into S sub-areas according to quadrants. Each antenna array is configured to perform beam scanning on one sub-area.

In a second aspect, an antenna array determination method is provided. The antenna array determination method is applied to a satellite communication system and includes: acquiring position information of user equipment and position information corresponding to each of S sub-areas, wherein the S sub-areas are obtained after dividing a scanning area of the satellite communication system according to quadrants; determining a target sub-area from the S sub-areas according to the position information of the user equipment and the position information corresponding to each of the S sub-areas, wherein position information of the target sub-area matches the position information of the user equipment; and using a target antenna array to provide a communication service to the user equipment, wherein the target antenna array is an antenna array configured to perform beam scanning on the target sub-area.

In a third aspect, an electronic device is provided. The electronic device includes a processor; and a memory configured to store executable instructions for the processor; wherein the processor is configured to execute the instructions to implement the method as described in the second aspect.

In a fourth aspect, a computer-readable storage medium is provided. Instructions in the storage medium, when executed by a processor of an electronic device, cause the electronic device to be able to perform the method as described in the second aspect.

In a fifth aspect, a satellite communication system is provided. The satellite communication system includes the beam scanning apparatus as described in the first aspect.

### BRIEF DESCRIPTION OF DRAWING(S)

In order to explain technical solutions in the present application or the prior art more clearly, accompanying drawings that need to be used in descriptions of the embodiments or the prior art will be briefly introduced below. Apparently, the accompanying drawings in the following descriptions are only some embodiments recorded in the present application, and those of ordinary skill in the art can further obtain other accompanying drawings according to these accompanying drawings without creative work.
FIG. 1 is a schematic structural diagram of a beam scanning apparatus in one embodiment of the present application.
FIG. 2 is a schematic diagram of dividing a scanning area of a satellite communication system into four sub-areas and corresponding antenna arrays in one embodiment of the present application.
FIG. 3 is a schematic diagram of scanning coverage areas of four antenna arrays in one embodiment of the present application.
FIG. 4 is a schematic structural diagram of a beam scanning apparatus in one embodiment of the present application.
FIG. 5 is a schematic structural diagram of a transceiver module in one embodiment of the present application.
FIG. 6 is a schematic structural diagram of a sub-array unit in one embodiment of the present application.
FIG. 7 is a schematic structural diagram of a beam scanning apparatus in one embodiment of the present application.
FIG. 8 is a schematic structural diagram of a beam scanning apparatus in one embodiment of the present application.
FIG. 9 is a schematic flowchart of an antenna array determination method in one embodiment of the present application.
FIG. 10 is a schematic diagram of area coverage when a satellite moves relative to user equipment in one embodiment of the present application.
FIG. 11 is a schematic structural diagram of an electronic device in one embodiment of the present application.
FIG. 12 is a schematic structural diagram of an antenna array determination apparatus in one embodiment of the present application.

### DETAILED DESCRIPTION

In order to enable those in the technical field to better understand technical solutions in the present application, the following will clearly and completely describe the technical solutions in the present application in conjunction with accompanying drawings in one or more embodiments of the present application. Apparently, the described embodiments are only part of the embodiments of the present application, rather than all the embodiments. Based on the embodiments in the present application, all other embodiments obtained by those of ordinary skill in the art without making creative work should belong to the scope of protection of the present application.

Terms "first," "second," and the like in the present application and claims are used to distinguish similar objects, and are not used to describe a specific order or sequence. It should be understood that data so used may be interchanged in appropriate cases so that the present application can be implemented in an order other than those illustrated or described here. In addition, "and/or" in the present application and claims indicates at least one of connected objects, and a character "/" generally indicates that front and back associated objects are in an "or" relationship.

A satellite communication system is a non-terrestrial communication system, which typically adopts an analog-side phase-shift technology or an all-digital phase-shift technology to perform phase-shift processing on a beam, and then forms a number of high-gain spot beams through its antenna array face or sub-array, so as to achieve a high-gain spot beam for a designated area service under single-star coverage. However, most of system architectures corresponding to the two phase-shift technologies adopt single-array face antennas for multibeam scanning, while beam scanning angles of the single-array face antennas are limited, and beam scanning at a larger angle cannot be achieved.

In the related art, a satellite communication system may adopt a multi-array face antenna for multibeam scanning, thus achieving beam scanning at a larger angle. However, a characteristic of this beam scanning method is that a sub-array face antenna achieves single-beam one-dimensional scanning or a fixed spot beam for coverage. Although beam scanning at a large angle may be achieved, since its sub-array face antenna achieves one-dimensional scanning or fixed spot beam scanning, when a user moves at a high speed in a direction perpendicular to a satellite movement direction, there is a problem of frequent beam hopping switching due to the limitation of a scanning angle of a sub-array antenna unit, which reduces the performance of the system.

Embodiments of the present application provide a beam scanning apparatus, an antenna array determination method, and a satellite communication system. By dividing scanned airspace that the satellite communication system needs to cover into S sub-areas according to quadrants, and by using S antenna arrays to independently scan the S sub-areas respectively, a beam scanning angle of the satellite communication system may be effectively increased, thereby enhancing an overall coverage area of the satellite system communication system. In addition, since the S sub-areas are obtained by division according to the quadrants, and each antenna array may scan one sub-area independently, beam scanning in a two-dimensional direction may be achieved for any antenna array, and a scanning range is larger. In this way, when a communication service is provided to user equipment through the S antenna arrays, the problem of frequent beam hopping switching may be avoided regardless of a direction in which the user equipment moves relative to the satellite communication system, thereby improving the performance of the system.

It should be noted that the technical solutions provided by the embodiments of the present application may be applicable not only to the satellite communication system, but also to other non-terrestrial communication systems, active antenna unit (AAU) base stations, phased array systems, and other systems that use antennas for beam scanning. The embodiments of the present application are illustrated only by the example of the satellite communication system.

The technical solutions provided by the embodiments of the present application are described in detail below in combination with accompanying drawings.

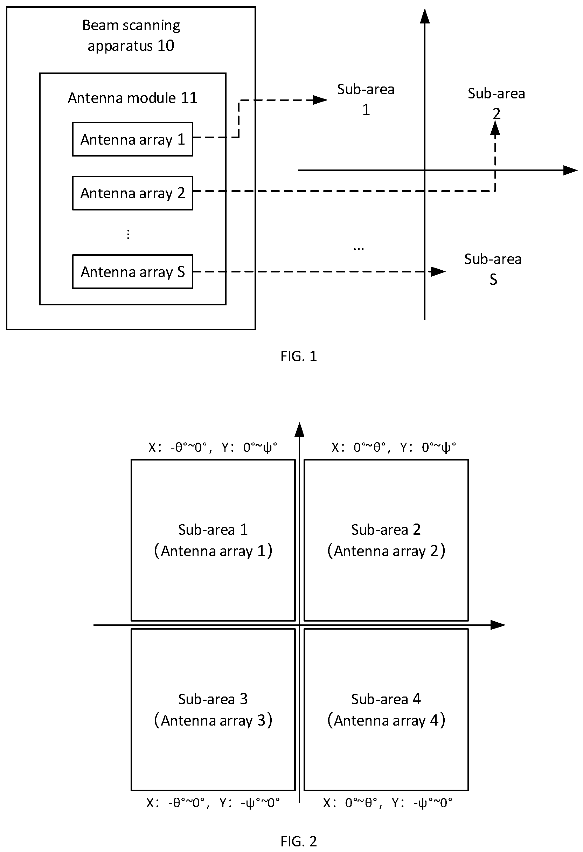

FIG. 1 is a schematic structural diagram of a beam scanning apparatus in one embodiment of the present application. The beam scanning apparatus 10 shown in FIG. 1 may be applied to a satellite communication system. The beam scanning apparatus 10 includes an antenna module 11. The antenna module 11 includes S antenna arrays, namely an antenna array 1, an antenna array 2, ... and an antenna array S respectively. A scanning area of the satellite communication system may be divided into S sub-areas according to quadrants, namely a sub-area 1, a sub-area 2, ... and a sub-area S respectively. Each antenna array is configured to perform independent beam scanning on one sub-area, i.e., the antenna array 1 may perform independent beam scanning on the sub-area 1, the antenna array 2 may perform independent beam scanning on the sub-area 2, ..., and the antenna array S may perform independent beam scanning on the sub-area S.

The above division of the scanning area of the satellite communication system into the S sub-areas according to the quadrants may be division of the scanning area of the satellite communication system into S two-dimensional sub-areas according to two-dimensional quadrants. The shape of each two-dimensional sub-area may be a rectangle, a circle, or other shapes, etc., which is not specifically limited herein as long as it is ensured that the S two-dimensional sub-areas can cover the beam scanning area of the satellite communication system. Each antenna array, when performing independent beam scanning on its corresponding two-dimensional sub-area, may perform scanning in a two-dimensional direction, so that a beam scanning angle and a beam scanning range may be increased compared to one-dimensional scanning, thereby achieving beam scanning at a larger angle.

It should be noted that the number S of antenna arrays included in the antenna module, i.e., the number S of sub-areas obtained after dividing the scanning area of the satellite communication system according to the quadrants, is an integer greater than 0. FIG. 1 illustrates only an example of S greater than 2.

Optionally, in a possible implementation, the above number S of antenna arrays, i.e., the number S of sub-areas, may be equal to 4ⁿ, and n is an integer greater than 0. That is, the scanning area of the satellite communication system may be divided into 4" sub-areas according to quadrants, and the 4" antenna arrays are used to perform independent beam scanning on each sub-area respectively.

Taking n=0 as an example, as shown in FIG. 2, a scanning area of a satellite communication system may be divided into four sub-areas according to quadrants, namely, a sub-area 1, a sub-area 2, a sub-area 3, and a sub-area 4. The four sub-areas are scanned independently by an antenna array 1, an antenna array 2, an antenna array 3, and an antenna array 4 respectively. In an X direction, a beam scanning range of a single array face is 0 to θ°. In a Y direction, a beam scanning range of a single array face is 0 to ψ°. In this way, the entire system has a maximum scanning range of 2θ° in the X direction and a maximum scanning range of 2ψ° in the Y direction. Compared to one-dimensional scanning, although a scanning angle of a single array face antenna in a single direction is reduced, a larger scanning angle may be achieved at the level of the entire system.

It should be noted that in the case where n is greater than or equal to 2, i.e., where the scanning area of the satellite communication system is divided into 16 sub-areas or more sub-areas according to quadrants, although beam scanning at a larger angle may be achieved, the number of sub-areas is increased, and thus the number of times of beam hopping switching is increased during the movement of user equipment relative to the satellite communication system, thereby increasing the complexity of the system. Therefore, if there is no special requirement, the value of n may be preferably 1, i.e., the scanning area of the satellite communication system is divided into four sub-areas according to quadrants, and four antenna arrays are adopted to perform independent beam scanning on the four sub-areas respectively.

Optionally, at least two of the above S sub-areas may have an overlapping area. In this way, it may be facilitated that when the user equipment moves to the overlapping area, a satellite communication device may prejudge a position of the user equipment in advance in the overlapping area, and then perform switching of the antenna array and the adjustment of beamforming, so as to provide a more stable communication service to the user equipment. The specific size of the overlapping area may be determined according to actual situations, which is not specifically limited herein.

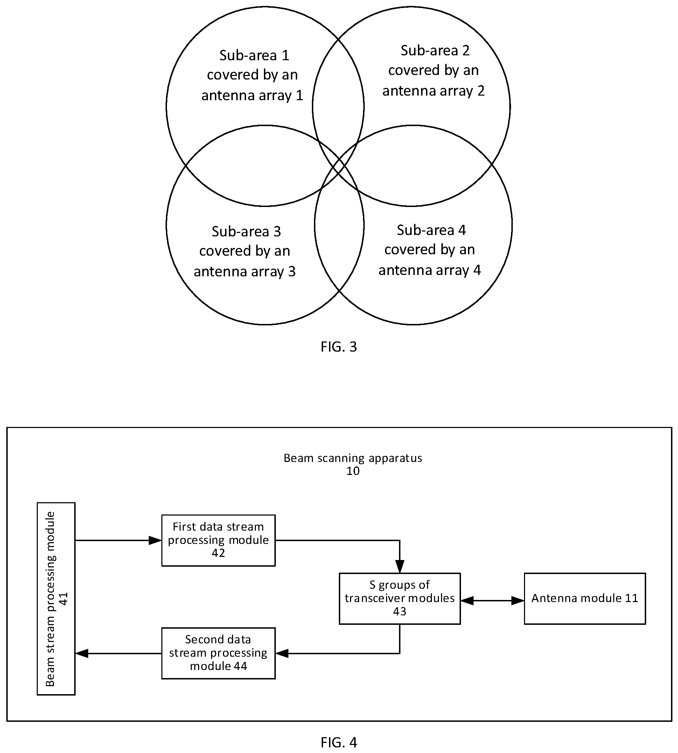

Taking an example of dividing the scanning area of the satellite communication system into four sub-areas, an overlapping area may exist between every two of the four areas. As shown in FIG. 3, a coverage area of each antenna array may be a circular area. A coverage area 1 of the antenna array 1 has overlapping areas with coverage areas of other antenna arrays. The antenna array 2, the antenna array 3, and the antenna array 4, similarly, also have overlapping areas with the coverage areas of other antenna arrays.

The beam scanning apparatus provided in the embodiment of the present application may further include, in addition to the antenna module, a beam stream processing module, a first data stream processing module, a second data stream processing module, and S groups of transceiver modules. Please refer to FIG. 4. In FIG. 4, the beam stream processing module 41 is connected to the first data stream processing module 42, the first data stream processing module 42 is connected to the S groups of transceiver modules 43, and the S groups of transceiver modules 43 are connected to the antenna module 11. In addition, the beam stream processing module 41 is further connected to the second data stream processing module 44, and the second data stream processing module 44 is connected to the S groups of transceiver modules 43. The beam stream processing module 41, the first data stream processing module 42, the S groups of transceiver modules 43, and the antenna module 11 may jointly implement downlink communication, or, the beam stream processing module 41, the second data stream processing module 44, the S groups of transceiver modules 43, and the antenna module 11 may jointly implement uplink communication.

Downlink communication and uplink communication are explained respectively in the following.

In the downlink communication, M groups of signals may be obtained after N beam streams are sequentially processed by the beam stream processing module and the first data stream processing module. Each group of signals includes Q sub-signals. The S groups of transceiver modules are configured to route the Q sub-signals in each group of signals to different antenna arrays of the antenna module, and downlink beam scanning is performed by the antenna arrays to achieve the downlink communication.

The N beam streams may be provided by a baseband data side, which may be specifically related to the number of adjustable beams needed by the satellite communication system. For example, in downlink communication, if the satellite communication system needs N adjustable beams, then the corresponding baseband data side needs to provide at least N beam streams.

The beam stream processing module may perform digital encoding processing on the N beam streams when processing the N beam streams. After the digital encoding processing, the N beam streams may be divided into M data streams, and each data stream may be obtained by weighting the N beam streams. N is an integer greater than 1, and M is an integer greater than or equal to N. For example, N is 16, and M may be 64.

After the M data streams are obtained by the processing of the beam stream processing module, the first data stream processing module may process the M data streams to obtain the M groups of signals. One group of signals may be correspondingly obtained from one data stream, each group of signals may include Q sub-signals, and Q is an integer greater than 1.

When the first data stream processing module processes the M data streams, there may be various processing methods. Accordingly, there may be various structures for the first data stream processing module. Optionally, in a possible implementation, the first data stream processing module may include M digital-to-analog converter (DAC) modules, M radio frequency modules, M power division modules, and M phase shift modules. Each DAC module is connected to one radio frequency module, each radio frequency module is connected to one power division module, each power division module is connected to one phase shift module, and each phase shift module includes Q phase shifters. When the first data stream processing module processes the M data streams, for each of the data streams, the data stream may be processed sequentially by one DAC module, one radio frequency module, one power division module, and Q phase shifters in one phase shift module to obtain Q sub-signals, and the Q sub-signals constitute one group of signals. In this way, after the M data streams are processed by the M DAC modules, the M radio frequency modules, the M power division modules, and the M phase shift modules in the first data stream processing module, the corresponding M groups of signals may be obtained.

Optionally, in another possible implementation, the first data stream processing module may include M groups of phase shift modules, M groups of DAC modules, and M groups of radio frequency modules. Each group of phase shift modules includes Q phase shifters, each group of DAC modules includes Q DAC modules, each group of radio frequency modules includes Q radio frequency modules, each phase shifter is connected to one DAC module, and each DAC module is connected to one radio frequency module. When the first data stream processing module processes the M data streams, for each of the data streams, the data stream may be processed sequentially by Q phase shifters in one group of phase shift modules, Q DAC modules in one group of DAC modules, and Q radio frequency modules in one group of radio frequency modules, and then one group of signals including Q sub-signals is obtained. In this way, after the M data streams are processed by the M groups of phase shift modules, the M groups of DAC modules, and the M groups of radio frequency modules in the first data stream processing module, the corresponding M groups of signals may be obtained.

After the first data stream processing module obtains the M groups of signals, the S groups of transceiver modules may route the M groups of signals to the S antenna arrays. Specifically, for each group of signals in the M groups of signals, the S groups of transceiver modules may route Q sub-signals in the group of signals to different antenna arrays. Optionally, Q may be greater than or equal to S. In a case where Q is greater than S, each group of transceiver modules may be configured to route at least one sub-signal of each of the M groups of signals to one antenna array. In a case where Q is equal to S, each group of transceiver modules may be configured to route one sub-signal of each of the M groups of signals to one antenna array. For example, if Q is equal to 8 and S is equal to 4, each group of transceiver modules may route two sub-signals of each of the M groups of signals to one antenna array. If Q is equal to 4 and S is equal to 4, each group of transceiver modules may route one sub-signal of each of the M groups of signals to one antenna array.

Optionally, each group of transceiver modules may include a plurality of transceiver modules, and in downlink communication, each transceiver module may route one or more sub-signals to one antenna array. The number of transceiver modules included in each group of transceiver modules may be determined according to actual situations, which is not specifically limited herein. Optionally, if Q is equal to S, the number of transceiver modules included in each group of transceiver modules may be M, such that one transceiver module may route one sub-signal to one antenna array. For example, if both Q and S are equal to 4, assuming that the M groups of signals are 64 groups of signals, each group of transceiver modules may include 64 transceiver modules, each group of transceiver modules is configured to route one sub-signal of each of the 64 groups of signals (a total of 64 sub-signals) to one antenna array, and each transceiver module may route one sub-signal of the 64 sub-signals to one antenna array.

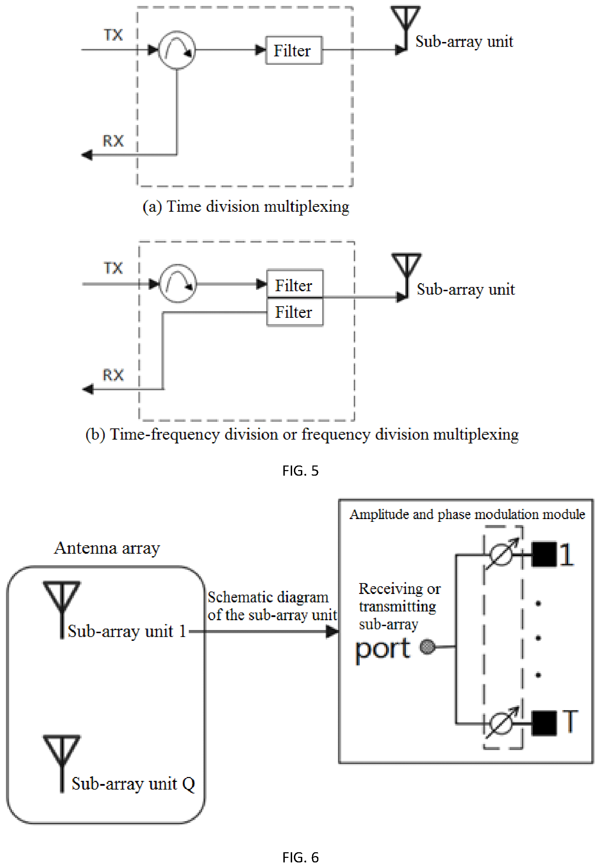

Optionally, for each group of transceiver modules, operating modes of the plurality of transceiver modules included therein may be the same. The operating modes of the plurality of transceiver modules may be time division multiplexing, or time-frequency division, or frequency division multiplexing. As shown in FIG. 5, FIG. 5(a) is a schematic structural diagram of a transceiver module under time division multiplexing, and FIG. 5(b) is a schematic structural diagram of a transceiver module under time-frequency division or frequency division multiplexing. Based on a structure shown in FIG. 5(a), the transceiver module may implement a time division multiplexing communication mode. Based on a structure shown in FIG. 5(a), the transceiver module may implement a time-frequency division or frequency division multiplexing communication mode. TX in FIG. 5 denotes transmit, and RX denotes receive.

Optionally, a plurality of sub-array units may be included in each antenna array. In downlink communication, each group of transceiver modules, when routing a plurality of sub-signals to one antenna array, may route the plurality of sub-signals to different sub-array units of the antenna array, and each sub-array unit may be configured to process one or more sub-signals. The number of sub-array units in each antenna array may be determined according to actual situations, which is not specifically limited herein. Each sub-array unit may include T amplitude and phase modulation modules and T sub-array unit radiators, and T is an integer greater than 0. As shown in FIG. 6, Q sub-array units may be included in one antenna array, and T amplitude and phase modulation modules and T sub-array unit radiators are included in each sub-array unit (each small black square shown in FIG. 6 denotes one sub-array unit radiator).

The above details how the beam stream processing module, the first data stream processing module, the S groups of transceiver modules, and the antenna module perform signal processing in a downlink communication scenario. The following will detail how the beam stream processing module, the second data stream processing module, the S groups of transceiver modules, and the antenna module perform signal processing in an uplink communication scenario.

In uplink communication, any antenna array in the antenna module may receive a signal sent by the user equipment in a beam scanning mode. Specifically, a plurality of sub-array units are included in each antenna array, and each sub-array unit may be configured to perform signal reception. A structure of each sub-array unit may refer to the embodiment shown in FIG. 6 and will not be repeated herein.

After the S antenna arrays receive signals sent by the user equipment, the S groups of transceiver modules may generate Q groups of signals according to signals received by the S antenna arrays. Each group of signals includes M sub-signals. N beam streams are obtained after the Q groups of signals are sequentially processed by the second data stream processing module and the beam stream processing module. Q, M, and N are the same in magnitude as Q and M recorded in the downlink communication above and will not be repeated herein. When the S groups of transceiver modules generate the Q groups of signals, it may be that each group of transceiver modules generates one group of signals according to signals received by one antenna array. Specifically, a plurality of transceiver modules are included in each group of transceiver modules, each transceiver module may generate one or more sub-signals according to the signals received by one antenna array, and the sub-signals generated by the plurality of transceiver modules constitute one group of signals. An operating mode and structure of each transceiver module may refer to the embodiment shown in FIG. 5, which is also not repeated herein. After the S groups of transceiver modules generate the Q groups of signals, the second data stream processing module may process the Q groups of signals to obtain M data streams. One data stream may be generated corresponding to one sub-signal of each of the Q groups of signals, such that M data streams may be generated corresponding to the Q groups of signals. N beam streams may be obtained after the M data streams are processed by the beam stream processing module.

When the second data stream processing module processes the Q groups of signals, there may be various processing methods. Accordingly, there may be various structures for the second data stream processing module. Optionally, in a possible implementation, the second data stream processing module may include M analog-to-digital converter (ADC) modules, M radio frequency modules, M power division modules, and M phase shift modules. Each ADC module is connected to one radio frequency module, each radio frequency module is connected to one power division module, each power division module is connected to one phase shift module, and each phase shift module includes Q phase shifters. When the second data stream processing module processes the Q groups of signals, one sub-signal of each of the Q groups of signals (a total of Q sub-signals) may be processed sequentially by Q phase shifters in one phase shift module (one phase shifter may process one sub-signal), one power division module, one radio frequency module, and one ADC module to obtain one data stream. In this way, after the Q groups of signals are processed by the M phase shift modules, the M power division modules, the M radio frequency modules, and the M ADC modules in the second data stream processing module, M corresponding data streams may be obtained.

Optionally, in another possible implementation, the second data stream processing module may include M groups of phase shift modules, M groups of ADC modules, and M groups of radio frequency modules; and each group of phase shift modules includes Q phase shifters, each group of ADC modules includes Q ADC modules, each group of radio frequency modules includes Q radio frequency modules, each phase shifter is connected to one ADC module, and each ADC module is connected to one radio frequency module. When the second data stream processing module processes the Q groups of signals, one sub-signal of each of the Q groups of signals (a total of Q sub-signals) may be processed sequentially by one group of radio frequency modules, one group of ADC modules, and one group of phase shifters to obtain one corresponding data stream, and each radio frequency module, each DAC module, and each phase shifter are configured to process one sub-signal. In this way, after the Q groups of signals are processed by the M groups of phase shift modules, the M groups of ADC modules, and the M groups of radio frequency modules in the second data stream processing module, the M corresponding data streams may be obtained.

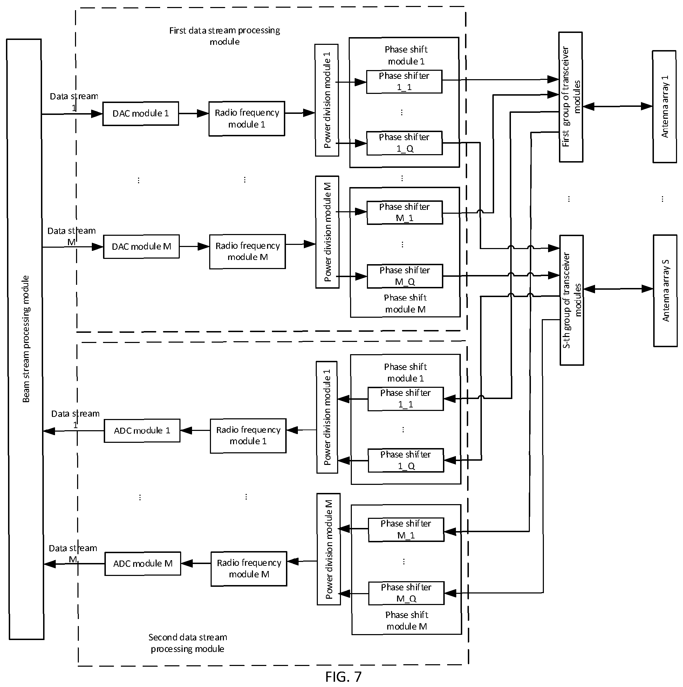

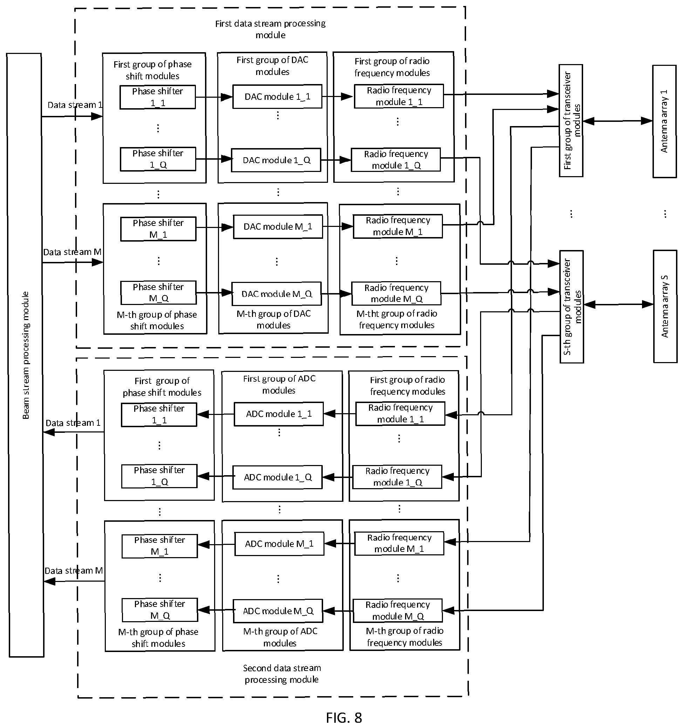

To facilitate the understanding of the beam stream processing module, the first data stream processing module, the second data stream processing module, the S groups of transceiver modules, and the S antenna arrays above, reference may be made to FIGS. 7 and 8.

A beam stream processing module, a first data stream processing module, a second data stream processing module, S groups of transceiver modules, and S antenna arrays are included in a beam scanning apparatus shown in FIG. 7. The first data stream module includes M DAC modules, M radio frequency modules, M power division modules, and M phase shift modules. Each phase shift module includes Q phase shifters. The second data stream processing module includes M ADC modules, M radio frequency modules, M power division modules, and M phase shift modules. Each phase shift module includes Q phase shifters. Q here may be illustrated by the example of being equal to S.

In downlink communication, a baseband data side provides N beam streams. The N beam streams are divided into M data streams (M≥N) after undergoing digital encoding and processing by the beam stream processing module, and each data stream is obtained by weighting the N beam streams. The M data streams reach the M radio frequency modules through the M DAC modules, and then are processed by the M power division modules and the M phase shift modules to obtain the M groups of signals, and each group of signals includes Q sub-signals. An i-th (i=1, 2, ..., Q) sub-signal of the M groups of signals is routed via an i-th group of transceiver modules to different sub-array units (not shown in FIG. 7) of an i-th antenna array. These signals are subjected to amplitude and phase modulation by the antenna array to form different beams, and an area covered by the antenna array is scanned, which is similar for other antenna arrays.

In uplink communication, after the S antenna arrays receive signals sent by the user equipment, the plurality of transceiver modules may process the signals received by the S antenna arrays to obtain Q groups of signals, and M sub-signals are included in each group of signals. One data stream is obtained after a j-th (j=1, 2, ..., M) sub-signal in the Q groups of signals is processed sequentially by a j-th phase shift module, a j-th power division module, a j-th radio frequency module, and a j-th ADC module, and thus M data streams may be obtained. N beam streams may be obtained after the M data streams are processed by the beam stream processing module.

A beam stream processing module, a first data stream processing module, a second data stream processing module, S groups of transceiver modules, and S antenna arrays are included in a beam scanning apparatus shown in FIG. 8. The first data stream processing module includes M groups of phase shift modules, M groups of DAC modules, and M groups of radio frequency modules. Each group of phase shift modules includes Q phase shifters, each group of DAC modules includes Q DAC modules, and each group of radio frequency modules includes Q radio frequency modules. The second data stream processing module includes M groups of phase shift modules, M groups of ADC modules, and M groups of radio frequency modules. Each group of phase shift modules includes Q phase shifters, each group of ADC modules includes Q ADC modules, and each group of radio frequency modules includes Q radio frequency modules. Q here may be illustrated by the example of being equal to S.

In downlink communication, a baseband data side provides N beam streams. The N beam streams are divided into M data streams (M≥N) after undergoing digital encoding and processing by the beam stream processing module, and each data stream is obtained by weighting the N beam streams. After the M data streams are sequentially processed by the M groups of phase shift modules, the M groups of DAC modules, and the M groups of radio frequency modules, M groups of signals are obtained, and each group of signals includes Q sub-signals. An i-th (i=1, 2, ..., Q) sub-signal in the M groups of signals is routed via an i-th group of transceiver modules to different sub-array units (not shown in FIG. 8) of an i-th antenna array. These signals are subjected to amplitude and phase modulation by the antenna array to form different beams, and an area covered by the antenna array is scanned, which is similar for other antenna arrays.

In uplink communication, after the S antenna arrays receive signals sent by the user equipment, the plurality of transceiver modules may process the signals received by the S antenna arrays to obtain Q groups of signals, and M sub-signals are included in each group of signals. One data stream is obtained after a j-th (j=1, 2, ..., M) sub-signal in the Q groups of signals is processed sequentially by a j-th group of radio frequency modules, a j-th group of ADC modules, and a j-th group of phase shift modules, and thus M data streams may be obtained. N beam streams may be obtained after the M data streams are processed by the beam stream processing module.

Based on the beam scanning apparatus provided in the embodiment of the present application, since scanned airspace that the satellite communication system needs to cover may be divided into S sub-areas according to quadrants, and S antenna arrays are used to independently scan the S sub-areas respectively, a beam scanning angle of the satellite communication system may be effectively increased, thereby enhancing an overall coverage area of the satellite system communication system. In addition, since the S sub-areas are obtained by division according to the quadrants, and each antenna array may scan one sub-area independently, beam scanning in a two-dimensional direction may be achieved for any antenna array, and a scanning range is larger. In this way, when a communication service is provided to user equipment through the S antenna arrays, the problem of frequent beam hopping switching may be avoided regardless of a direction in which the user equipment moves relative to the satellite communication system, thereby improving the performance of the system.

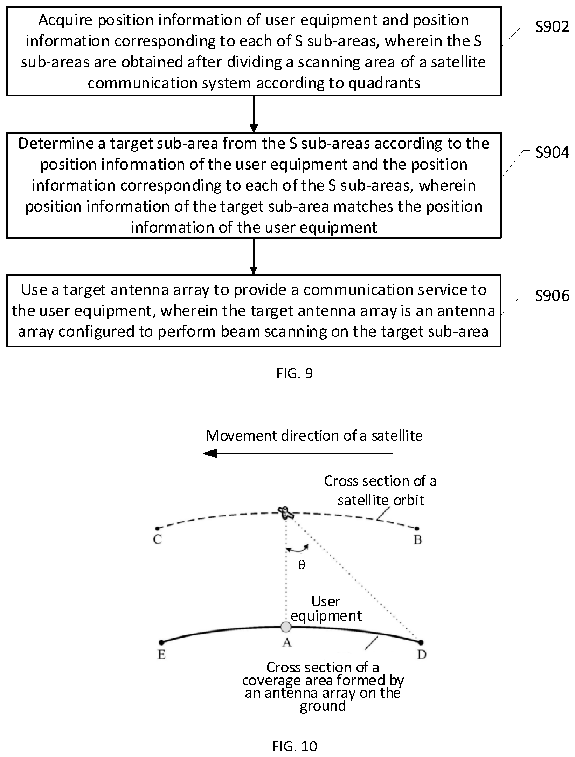

FIG. 9 is a schematic flowchart of an antenna array determination method in one embodiment of the present application. The antenna array determination method shown in FIG. 9 may be applied to a satellite communication system. The antenna array determination method shown in FIG. 9 may include the following steps.

S902: position information of user equipment and position information corresponding to each of S sub-areas are acquired, wherein the S sub-areas are obtained after dividing a scanning area of the satellite communication system according to quadrants.

The satellite communication system may acquire the position information of the user equipment when providing a communication service to the user equipment, and the position information here may be absolute position information of the user equipment (such as geographic position information) or relative position information of the user equipment relative to the satellite communication system, which is not specifically limited herein. The satellite communication system, when acquiring the position information of the user equipment, may further acquire position information corresponding to its scanning area. In the embodiment of the present application, the scanning area of the satellite communication system may be divided into S sub-areas according to quadrants, and the satellite communication system, when acquiring the position information corresponding to its scanning area, may acquire the position information corresponding to each of the S sub-areas. S is an integer greater than 1. Optionally, S may be equal to 4ⁿ, and n is an integer greater than 0.

S904: a target sub-area is determined from the S sub-areas according to the position information of the user equipment and the position information corresponding to each of the S sub-areas, wherein position information of the target sub-area matches the position information of the user equipment.

The position information of the target sub-area matching the position information of the user equipment may be that the user equipment is located in an area range corresponding to the target sub-area. After acquiring the position information of the user equipment and the position information corresponding to each of the S sub-areas, the satellite communication system may determine, according to the position information, which sub-area whose area range the user equipment is located in, and determine the sub-area as the target sub-area. For example, if the user equipment is located in an area range corresponding to a sub-area 1, the sub-area 1 may be determined as the target sub-area.

S906: a target antenna array is used to provide a communication service to the user equipment, wherein the target antenna array is an antenna array configured to perform beam scanning on the target sub-area.

In the embodiment of the present application, the satellite communication system, in a case of dividing its scanning area into S sub-areas according to quadrants, may use one antenna array to perform independent beam scanning for each sub-area. In this way, when a service is provided to the user equipment, after the target sub-area is determined from the S sub-areas, an antenna array configured to perform beam scanning on the target sub-area may be used as a target antenna array, and the target antenna array is used to provide the service to the user equipment.

It should be noted that at least two of the above S sub-areas may have an overlapping area. When the target sub-area is determined, there may exist user equipment located in an overlapping area of two or more sub-areas, at which time the two or more sub-areas corresponding to the overlapping area may be determined as target sub-areas. When a communication service is provided to the user equipment, an antenna array corresponding to an appropriate sub-area may be selected to provide the service to the user equipment under the premise of reducing beam hopping switching.

It should also be noted that in practical application scenarios, both the user equipment and the satellite communication system are in motion, i.e., the position information of the user equipment and the position information corresponding to each of the S sub-areas are variable. In this way, the satellite communication system, after using a certain target antenna array to provide a communication service to a user, may continue to acquire the position information of the user equipment as well as the respective position information of the S sub-areas, and flexibly adjust, according to these position information, the antenna array that provides the communication service to the user equipment, so that the communication service may be better provided to the user equipment.

Optionally, in a possible implementation, a movement trajectory of the user equipment may also be predicted, and the antenna array providing the communication service to the user equipment may be dynamically adjusted according to the predicted movement trajectory, which may specifically include the following steps:
acquiring a plurality of pieces of position information of the user equipment;
predicting the movement trajectory of the user equipment according to the plurality of pieces of position information; and
dynamically adjusting, according to the predicted movement trajectory of the user equipment, the antenna array providing the communication service to the user equipment.

The above plurality of pieces of the position information of the user equipment may be a plurality of pieces of position information of the user equipment in a specified time period, and the specified time period may be determined according to actual needs, which is not specifically limited herein. For example, for user equipment in a high-speed motion, the specified time period may be 1 minute, i.e., a plurality of pieces of position information of the user equipment within 1 minute are acquired. For user equipment in a low-speed motion, the specified time period may be half an hour, i.e., a plurality of pieces of position information of the user equipment within half an hour are acquired.

After the plurality of pieces of position information of the user equipment are acquired, the movement trajectory of the user equipment may be predicted according to the position information. There may be various methods for predicting the movement trajectory, which may specifically refer to specific implementations in the related art, and will not be described in detail herein.

After the movement trajectory of the user equipment is obtained by prediction, the position information of the user equipment at a future moment t may be determined according to the movement trajectory, the position information may be compared with the position information of the S sub-areas to determine which sub-area corresponding to which an area range the user equipment is located in at the moment t, and an antenna array corresponding to the sub-area may be used as a target antenna array corresponding to the moment t. In this way, when the moment t is about to be reached, the antenna array may be switched to the pre-determined target antenna array corresponding to the moment t. As a result, a dynamic adjustment of the antenna array may be achieved according to the predicted movement trajectory, so that the communication service may be better provided to the user equipment.

FIG. 10 is a schematic diagram of a satellite communication system moving relative to user equipment. In FIG. 10, a process of providing a communication service to the user equipment by the satellite communication system may be described as follows.

Assuming that the user equipment is at a point A of FIG. 10, a satellite moves from a point B to a point C. At an initial time at the point B, assuming that a spot beam signal quality of an antenna array 1 corresponding to the point A is the best, signal coverage is provided by a beam 1 of the antenna array 1, and a position P1 (x1, y1, z1) of the user equipment is tracked and positioned. A time T1 is recorded, while a shaping parameter of the antenna array 1 is updated, and a best channel quality is maintained. When the satellite moves to other points at a high speed and the coverage area relative to the user equipment changes, assuming that the movement is to an overlapping coverage area of the antenna array 1 and the other array antennas, then, at this time, the communication service may be still provided to the user equipment by the antenna array 1, and a position Pn (xn, yn, zn) of the user equipment is tracked and positioned. A time Tn is recorded, while a beamforming parameter of the antenna array 1 is updated, and a best channel quality is maintained. Through the position information of the user equipment obtained by the system at different moments, the possible movement trajectory of the user equipment may be intelligently calculated, and the movement trajectory is continuously and iteratively corrected. According to a relative movement trajectory of the user equipment and the satellite, a relative position of the user equipment may be pre-judged in advance in the array coverage overlapping area, and a beamforming parameter of the beam in this array face is adjusted in time by other antenna arrays so as to take over the antenna array 1 to continue to provide services to the user equipment.

In the antenna array determination method provided in the embodiments of the present application, since the scanning area of the satellite communication system may be divided into S sub-areas according to quadrants, and one antenna array performs independent beam scanning on each sub-area, the beam scanning angle may be enlarged, service interruptions caused by beam hopping switching may be reduced when the service is provided to the user equipment, and thus the performance of the system is improved.

Specific embodiments of the present application are described above. Other embodiments are within the scope of the appended claims. In some cases, actions or steps recorded in the claims may be executed in an order different from that in the embodiments and still realize desired results. Further, the processes depicted in the accompanying drawings do not necessarily require the specific order or successive order shown to realize the desired results. In some implementations, multitasking and parallel processing may be possible or may be advantageous.

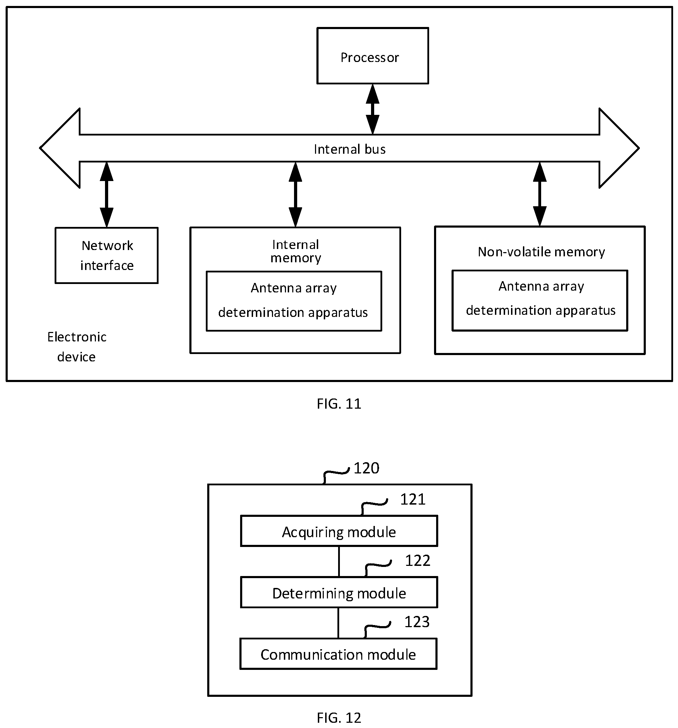

FIG. 11 is a schematic structural diagram of an electronic device in one embodiment of the present application. Referring to FIG. 11, at a hardware level, the electronic device includes a processor and optionally further includes an internal bus, a network interface, and a memory. The memory may contain an internal memory, such as a high-speed random-access memory (RAM), and may further include a non-volatile memory, such as at least one disk memory. Certainly, the electronic device may further include hardware required for other services.

The processor, the network interface and the memory may be connected to each other via the internal bus. The internal bus may be an industry standard architecture (ISA) bus, a peripheral component interconnect (PCI) bus, or an extended industry standard architecture (EISA) bus, etc. The bus may be categorized into an address bus, a data bus, a control bus, etc. For ease of representation, the bus is represented by only one bi-directional arrow in FIG. 11, but it does not indicate that there is only one bus or one type of bus.

The memory is configured to store a program. Specifically, the program may include a program code. The program code includes a computer operating instruction. The memory may include an internal memory and a nonvolatile memory and provide an instruction and data to the processor.

The processor reads a corresponding computer program from the non-volatile memory into the internal memory and then runs the same, forming an antenna array determination apparatus at a logical level. The processor executes the program stored in the memory and is specifically configured to perform the following operations:
acquiring position information of user equipment and position information corresponding to each of S sub-areas, wherein the S sub-areas are obtained after dividing a scanning area of the satellite communication system according to quadrants;
determining a target sub-area from the S sub-areas according to the position information of the user equipment and the position information corresponding to each of the S sub-areas, wherein position information of the target sub-area matches the position information of the user equipment; and
using a target antenna array to provide a communication service to the user equipment, wherein the target antenna array is an antenna array configured to perform beam scanning on the target sub-area.

The method performed by the antenna array determination apparatus disclosed by the embodiments shown in FIG. 11 of the present application may be applied to the processor or implemented by the processor. The processor may be an integrated circuit chip that has a capability to process signals. During an implementation process, all steps of the above method may be completed by an integrated logic circuit of hardware or instructions in the form of software in the processor. The above processor may be a general-purpose processor, including a central processing unit (CPU), a network processor (NP), etc., and may further be a digital signal processor (DSP), an application specific integrated circuit (ASIC), a field-programmable gate array (FPGA) or other programmable logic devices, a discrete gate or a transistor logic device, or a discrete hardware component. Various methods, steps, and logical block diagrams disclosed in the present application may be realized or performed. The general-purpose processor may be a microprocessor, or the processor may also be any conventional processor, etc. The steps of the method disclosed in conjunction with the present application may be directly embodied to be performed and completed by a hardware decoding processor, or may be performed and completed through a combination of hardware and software modules in a decoding processor. The software module may be located in a mature storage medium in the art, such as a random access memory, a flash memory, a read-only memory, a programmable read-only memory, an electrically erasable programmable memory, and a register. The storage medium is located in the memory. The processor reads information in the memory, and completes the steps of the above method in combination with its hardware.

The electronic device may also perform the method of FIG. 9 and implement the function of the antenna array determination apparatus in the embodiment shown in FIG. 8, which will not be repeated herein in the present application.

Certainly, in addition to the implementation of software, the electronic device of the present application does not exclude other implementations, such as a logic device or a combination of software and hardware, which means that a performing subject of the following processing flow is not limited to the individual logic units, but may also be hardware or a logic device.

The present application further proposes a computer-readable storage medium that stores one or more programs. The one or more programs include instructions that, when executed by a portable electronic device including a plurality of applications, can cause the portable electronic device to perform the method of the embodiment shown in FIG. 9, and be specifically configured to perform the following operations:
acquiring position information of user equipment and position information corresponding to each of S sub-areas, wherein the S sub-areas are obtained after dividing a scanning area of the satellite communication system according to quadrants;
determining a target sub-area from the S sub-areas according to the position information of the user equipment and the position information corresponding to each of the S sub-areas, wherein position information of the target sub-area matches the position information of the user equipment; and
using a target antenna array to provide a communication service to the user equipment, wherein the target antenna array is an antenna array configured to perform beam scanning on the target sub-area.

FIG. 12 is a schematic structural diagram of an antenna array determination apparatus 120 in one embodiment of the present application. Referring to FIG. 12, in a software implementation, the antenna array determination apparatus 120 may include: an acquiring module 121, a determining module 122, and a communication module 123.

The acquiring module 121 acquires position information of user equipment and position information corresponding to each of S sub-areas, wherein the S sub-areas are obtained after dividing a scanning area of the satellite communication system according to quadrants.

The determining module 122 determines a target sub-area from the S sub-areas according to the position information of the user equipment and the position information corresponding to each of the S sub-areas, wherein position information of the target sub-area matches the position information of the user equipment.

The communication module 123 uses a target antenna array to provide a communication service to the user equipment, wherein the target antenna array is an antenna array configured to perform beam scanning on the target sub-area.

Optionally, the acquiring module 121 is further configured to acquire a plurality of pieces of position information of the user equipment.

The determining module 122 is further configured to predict a movement trajectory of the user equipment according to the plurality of pieces of position information.

The communication module 123 is further configured to dynamically adjust, according to the predicted movement trajectory of the user equipment, an antenna array providing a communication service to the user equipment.

The antenna array determination apparatus 120 provided by the present application may also perform the method of FIG. 9 and implement the functions of the antenna array determination apparatus 120 in the embodiment shown in FIG. 9, which will not be repeated herein in the present application.

An embodiment of the present application further provides a satellite communication system. The satellite communication system includes the beam scanning apparatus provided in the embodiments of the present application. Based on the beam scanning apparatus, the satellite communication system may achieve beam scanning at a larger angle, which may reduce the service interruption caused by beam hopping switching when the service is provided to the user equipment, and thus the performance of the system is improved.

In conclusion, the foregoing is only preferred embodiments of the present application and is not used to limit the scope of protection of the present application. Any modifications, equivalent substitutions, improvements, etc. made within the spirit and principle of the present application shall be included in the scope of protection of the present application.

The system, apparatus, module, or unit clarified in the above embodiments may specifically be implemented by a computer chip or entity, or by a product having a certain function. A typical implementation device is a computer. Specifically, the computer may be, for example, a personal computer, a laptop computer, a cellular telephone, a camera phone, a smart phone, a personal digital assistant, a media player, a navigation device, an e-mail device, a gaming console, a tablet computer, a wearable device, or a combination of any of these devices.

Computer-readable media include permanent and non-permanent, removable and non-removable media, and may be used by any method or technology to implement information storage. Information may be computer-readable instructions, data structures, modules of a program, or other data. Examples of storage media for a computer include, but are not limited to, a phase-change random access memory (PRAM), a static random access memory (SRAM), a dynamic random access memory (DRAM), other types of random access memories (RAMs), a read only memory (ROM), an electrically erasable programmable read only memory (EEPROM), a flash memory or other memory technologies, a compact disc read only memory (CD-ROM), a digital versatile disc (DVD) or other optical storage, a magnetic cartridge tape, magnetic tape disk storage or other magnetic storage devices, or any other non-transfer media that may be used for storing information which may be accessed by a computing device. As defined herein, a computer-readable medium does not include transitory media, such as modulated data signals and carriers.

It also needs to be noted that terms "include," "contain," or any other variant thereof, are intended to cover non-exclusive inclusion, such that a process, method, commodity or device that includes a series of elements includes not only those elements but also other elements that are not explicitly listed, or further includes elements that are inherent to such a process, method, commodity or device. Without further limitation, an element defined by a phrase "including a ..." does not exclude the existence of other identical elements in the process, method, commodity or device including the element.

The various embodiments in the present application are described in a progressive mode, and the same or similar parts between the various embodiments can be referred to each other. Each embodiment focuses on contents different from other embodiments. In particular, for the system embodiment, as it is basically similar to the method embodiment, the description is relatively simple. As for related parts, please refer to partial description in the method embodiment.

## Claims

1. A beam scanning apparatus, applied to a satellite communication system, comprising:
an antenna module, wherein the antenna module comprises S antenna arrays, and S is an integer greater than 1;
wherein a scanning area of the satellite communication system is divided into S sub-areas according to quadrants, and each antenna array is configured to perform beam scanning on one sub-area.

2. The apparatus according to claim 1, wherein S=4ⁿ, and n is an integer greater than 0.

3. The apparatus according to claim 1, wherein at least two of the S sub-areas have an overlapping area.

4. The apparatus according to claim 1, further comprising a beam stream processing module, a first data stream processing module, a second data stream processing module, and S groups of transceiver modules, wherein
the beam stream processing module is connected to the first data stream processing module, the first data stream processing module is connected to the S groups of transceiver modules, and the S groups of transceiver modules are connected to the antenna module; in downlink communication, M groups of signals are obtained after N beam streams are sequentially processed by the beam stream processing module and the first data stream processing module, and each group of signals comprises Q sub-signals; the S groups of transceiver modules are configured to route the Q sub-signals in each group of signals to different antenna arrays; or,
the beam stream processing module is connected to the second data stream processing module, the second data stream processing module is connected to the S groups of transceiver modules, and the S groups of transceiver modules are connected to the antenna module; in uplink communication, the S groups of transceiver modules are configured to generate Q groups of signals according to signals received by the S antenna arrays, and each group of signals comprises M sub-signals; and N beam streams are obtained after the Q groups of signals are sequentially processed by the second data stream processing module and the beam stream processing module;
where N is an integer greater than 1, M is an integer greater than or equal to N, and Q is an integer greater than 1.

5. The apparatus according to claim 4, wherein Q=S;
in the downlink communication, each group of transceiver modules is configured to route one sub-signal of each of the M groups of signals to one antenna array; or,
in the uplink communication, each group of transceiver modules is configured to generate a group of signals according to signals received by one antenna array.

6. The apparatus according to claim 5, wherein each group of transceiver modules comprises a plurality of transceiver modules;
in the downlink communication, each transceiver module is configured to route one or more sub-signals to one antenna array; or,
in the uplink communication, each transceiver module is configured to generate one or more sub-signals according to the signals received by one antenna array.

7. The apparatus according to claim 6, wherein operating modes of the plurality of transceiver modules are time division multiplexing, or time-frequency division, or frequency division multiplexing.

8. The apparatus according to claim 4, wherein each antenna array comprises a plurality of sub-array units;
wherein each sub-array unit comprises T amplitude and phase modulation modules and T sub-array unit radiators, and T is an integer greater than 0.

9. The apparatus according to claim 4, wherein the first data stream processing module comprises M DAC modules, M radio frequency modules, M power division modules, and M phase shift modules; each DAC module is connected to one radio frequency module, each radio frequency module is connected to one power division module, each power division module is connected to one phase shift module, and each phase shift module comprises Q phase shifters; or,
the first data stream processing module comprises M groups of phase shift modules, M groups of DAC modules, and M groups of radio frequency modules; and each group of phase shift modules comprises Q phase shifters, each group of DAC modules comprises Q DAC modules, each group of radio frequency modules comprises Q radio frequency modules, each phase shifter is connected to one DAC module, and each DAC module is connected to one radio frequency module.

10. The apparatus according to claim 4, wherein the second data stream processing module comprises M ADC modules, M radio frequency modules, M power division modules, and M phase shift modules; each ADC module is connected to one radio frequency module, each radio frequency module is connected to one power division module, each power division module is connected to one phase shift module, and each phase shift module comprises Q phase shifters; or,
the second data stream processing module comprises M groups of phase shift modules, M groups of ADC modules, and M groups of radio frequency modules; and each group of phase shift modules comprises Q phase shifters, each group of ADC modules comprises Q ADC modules, each group of radio frequency modules comprises Q radio frequency modules, each phase shifter is connected to one ADC module, and each ADC module is connected to one radio frequency module.

11. An antenna array determination method, applied to a satellite communication system, comprising:
acquiring position information of user equipment and position information corresponding to each of S sub-areas, wherein the S sub-areas are obtained after dividing a scanning area of the satellite communication system according to quadrants;
determining a target sub-area from the S sub-areas according to the position information of the user equipment and the position information corresponding to each of the S sub-areas, wherein position information of the target sub-area matches the position information of the user equipment; and
using a target antenna array to provide a communication service to the user equipment, wherein the target antenna array is an antenna array configured to perform beam scanning on the target sub-area.

12. The method according to claim 11, further comprising:
acquiring a plurality of pieces of position information of the user equipment;
predicting a movement trajectory of the user equipment according to the plurality of pieces of position information; and
dynamically adjusting, according to the predicted movement trajectory of the user equipment, an antenna array providing a communication service to the user equipment.

13. An electronic device, comprising:
a processor; and
a memory configured to store executable instructions for the processor;
wherein the processor is configured to execute the instructions to implement the method according to any one of claims 11 to 12.

14. A computer-readable storage medium, wherein instructions in the storage medium, when executed by a processor of an electronic device, cause the electronic device to be able to perform the method according to any one of claims 11 to 12.

15. A satellite communication system, comprising the beam scanning apparatus according to any one of claims 1 to 10.
